# EUROPÄISCHE PATENTSCHRIFT

(11) **EP 0 577 948 B1**
(45) Veröffentlichungstag und Bekanntmachung des Hinweises auf die Patenterteilung: **27.08.1997**
(21) Anmeldenummer: 93107498.3
(22) Anmeldetag: 08.05.1993
(51) Int. Cl.: C02F 1/40, B01D 17/02, B01D 21/00

(54) **Abscheideranlage für mit Sink- und/oder Schwimmstoffen beladene Abwässer**
Plant for separating floating and/or suspended matters from contaminated waste waters
Installation pour la séparation de matières flottantes et/ou sédimentaires d'eaux usées

(30) Priorität: 11.05.1992 DE 4215470
(43) Veröffentlichungstag der Anmeldung: 12.01.1994
(73) Patentinhaber: PASSAVANT-WERKE AG, D-65322 Aarbergen 7 (DE)
(72) Erfinder: Sehr, Gerhard, W-5429 Allendorf (DE); Helffenstein, Kurt, W-65558 Flacht (DE)

(56) Entgegenhaltungen:
- EP-A- 0 167 950
- DD-A- 78 744
- DE-A- 3 704 911
- DE-A- 3 820 142
- DE-U- 9 003 226

## Beschreibung

Die Erfindung betrifft eine u.U. aus mehreren Beruhigungsbehältern bestehende Anlage zum Abscheiden von Sink- und/oder Schwimmstoffen aus Abwasser.

Derartige Anlagen sind bekannt und umfangreich in Gebrauch. Die entsprechenden Normen und Verwaltungsvorschriften geben vor, daß Abwässer, die solche Stoffe enthalten, vor der Einleitung in die Kanalisation oder den Vorfluter in Abscheideanlagen behandelt werden müssen. Die Vorschriften legen fest, wie die Beruhigungsbehälter der Abscheideanlagen hydraulisch ausgelegt und in welchen Zeitabständen die abgetrennten Stoffe entsorgt werden müssen.

Das Bestreben bei diesen Beruhigungsbehältern geht dahin, sie möglichst räumlich klein auszulegen. Diese Aufgabe wird in bekannter Weise (DE-A-37 04 911) dadurch gelöst, daß in einem stehend zylindrischen Beruhigungsgefäß eine spiralförmig von außen nach innen verlaufende Durchströmung eingestellt wird. Die Mittel zur Aufrechterhaltung dieser Durchströmung sind ein äußerer tangentialer Zulauf und ein im Behälterzentrum liegender Reinwasserablauf. Die Abscheideergebnisse sind hervorragend.

Bei Fettabscheidern wird diese Technik der Spiralströmung bereits ebenfalls schon genutzt (DE-A-38 20 142). Gerade Fett- und Stärkeabscheider oder die Kombination dieser Abscheider werden an Stellen mit geringen Abwasseranfallmengen gebraucht.

Aus DD-A-78744 ist ein Abscheider bekannt, der einen zentral aufwärts von unten angeströmter Beruhigungsbehälter aufweist. Der Zulaufstrom wird durch die Prall- und Siebplatte 4 gleichmäßig radial nach außen gespreizt und dann nach oben in die Abscheidetrichter umgelenkt. Nach aufwärts gerichtetem Verlassen der Trichteröffnung wird das Abwasser ringförmig nach außen und dann nach unten zu den auf dem Behälterumfang verteilten Ablaufleitungen 6 umgelenkt.

Bei diesem vorbekannten Ölabscheider sind die Klarwasserablaufleitungen durch den Deckel des Abscheidebehälters geführt und der Deckel ist als lösbar am Behälter 1 befestigtes Bauteil dargestellt.

Die Strömungsleitelemente 3, 4 und die Einrichtungen 5 zur Verbesserung der Abscheidung sind am Behalterboden befestigt.

Aufgabe der Erfindung ist, eine billige und kompakte Bauart zu finden, die problemlos entsorgt werden kann. Diese Aufgabe wird durch die Merkmale des Anspruchs 1 gelöst. Die Behälter besitzen somit keinerlei Wanddurchbrüche mehr. Deshalb ist es jetzt möglich, standardisierte oder genormte Fässer aus Kunststoff und/oder Stahlblech zu verwenden und die Deckelbefestigung als dort übliche Keilspannringe auszubilden. Ein solcher Deckel läßt sich vom Abscheidebehälter leicht lösen und zu Kontroll- und Wartungsarbeiten abnehmen. Für die Abscheidebehälter können billige Serienartikel verwendet werden. Auch die hydraulische Anpassung des Abscheidevolumens an den am Einbauort gegebenen Volumenstrom kann durch Wahl der Behältergröße leicht bewältigt werden.

Zum Abzug der abgetrennten Stoffe ist es vorteilhaft, den Flüssigkeitsdruck des zulaufenden Abwassers zu nutzen. Hierzu werden vorzugsweise der Klarwasserablauf verschließbar ausgebildet und die Abzugsleitungen für Sink- und Schwimmstoffe gegenüber der Zulaufleitung und der Verbindungsleitung so viel tiefer gelegt, daß die Stoffe hydraulisch aus den Beruhigungsgefäßen ausgetragen werden.

Weitere Einzelheiten der konstruktiven Ausbildung sind den Unteransprüchen und der nachfolgenden Beschreibung von Ausführungsbeispielen zu entnehmen.

Es zeigen:
- Fig. 1: eine erste Ausführungsform mit einem Beruhigungsbehälter im vertikalen Schnitt,
- Fig. 2: den horizontalen Schnitt durch den Beruhigungsbehälter von Fig.1,
- Fig. 3: eine zweite Ausführungsform mit zwei Beruhigungsbehältern in Reihe,
- Fig. 4: den Schnitt durch den zweiten Behälter von Fig. 3,
- Fig. 5: ein drittes Ausführungsbeispiel mit zwei Beruhigungsbehältern in Reihe.

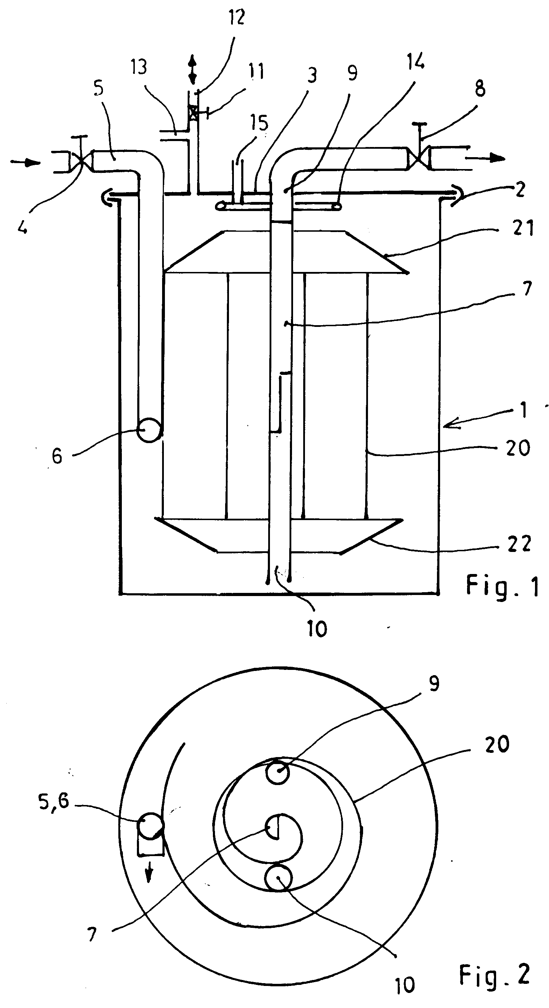

Der Beruhigungsbehälter 1 nach Fig. 1 ist ein stehend zylindrisches Gefäß mit einem durch einen Keilspannring 2 verschlossenen Deckel 3. Sämtliche Zu- und Ableitungen verlaufen durch diesen Deckel: die mit einem Ventil 4 versehene Zuleitung 5 für das zu behandelnde Abwasser, die bis etwa in halbe Behälterhöhe herunterreicht und unten in einem tangential ausgerichteten Knie 6 endet; die zentral ebenfalls in halber Behälterhöhe nach oben abgehende Ablaufleitung 7 für das gereinigte Wasser; die knapp unter dem Deckel beginnende und absperrbare (Ventil 8) Abzugsleitung 9 für die aufgeschwommenen Leichtstoffe; und die in Bodennähe beginnende Abzugsleitung 10 für die sedimentierten Sinkstoffe. Auch die durch ein Ventil 11 verschließbare Be- und Endlüftungsleitung 12 und die Zufuhrleitung 13 für die zur Entsorgung notwendige Druckluft sind am Deckel befestigt. Schließlich kann auch eine zum Verflüssigen von Fett benötigte Heizschlange 14 mit der Wasserzufuhrleitung 15 durch den Deckel geführt werden.

Um die Zulaufströmung auf möglichst langem Weg spiralförmig zum zentralen Ablauf 7 führen zu können, ist eine spiralförmig verlaufende Leitwand 20 vorgesehen, die vorzugsweise an den Zu- und Ablaufleitungen befestigt ist. Die Leitwand 20 beginnt innerhalb des tangentialen Zulaufs 6 und endet innen am Klarwasser-Ablaufrohr 7, das zu diesem Zweck in seinem Endbereich halb geöffnet ist. In der Höhe erstreckt sich die Leitwand etwa über zwei Drittel der lichten Innenmaße, wobei die Abstände vom Boden und Deckel etwa gleich groß sind. Die Leitwand wird oben und unten von Konen 21, 22 begrenzt, die die Aufgabe haben, die aufsteigenden bzw. absinkenden Stoffe räumlich zusammenzuziehen, damit sie durch die dort beginnenden Abzugsleitungen ausgetragen werden können.

Im Normalbetrieb ist die Entlüftungsleitung 12 geöffnet; die Abzugsleitungen 9, 10 sind geschlossen. Vor dem Entsorgen der abgeschiedenen Stoffe werden die Entlüftungsleitungen 12 und die Zu- und Ablaufleitungen 6, 7 geschlossen und dafür die Abzugsleitung 9 für die Schwimmstoffe geöffnet. Durch Zufuhr von Druckluft sinkt der Spiegel unter dem Deckel, so daß die Schwimmstoffe bis zum Erreichen der Mündung der Abzugsleitung herausgedrückt werden. Anschließend können die Sinkstoffe auf dieselbe Weise abgefördert werden. Für Fälle der Reinigung des Abscheidebehälters kann der ganze Behälter über die Abzugsleitung für die Sinkstoffe entleert werden.

Beide Konen 21, 22 können innen mit (nicht dargestellten) vertikalen Prallwänden ausgestattet werden, die den Zweck haben, die rotierende Strömung in diesen Bereichen zu bremsen und eine beruhigte Schwerkraftbewegung zu bewirken.

Die Einbauteile können anstelle ihrer Verbindung mit den Rohrleitungen lose in den Beruhigungsbehälter eingesetzt und durch Stellfüße und Abstandshalter ausgerichtet werden.

Die Schnittzeichnung in Fig. 2 macht deutlich, daß die Abzugsleitungen 9, 10 für den Sink- und Schwimmstoffaustrag zwar außermittig liegen, aber dennoch im Bereich der kleinen Öffnung des Konus' liegen, so daß zumindest die Sinkstoff-Abzugsleitung 10 bis an den Boden des Beruhigungsbehälters geführt werden kann.

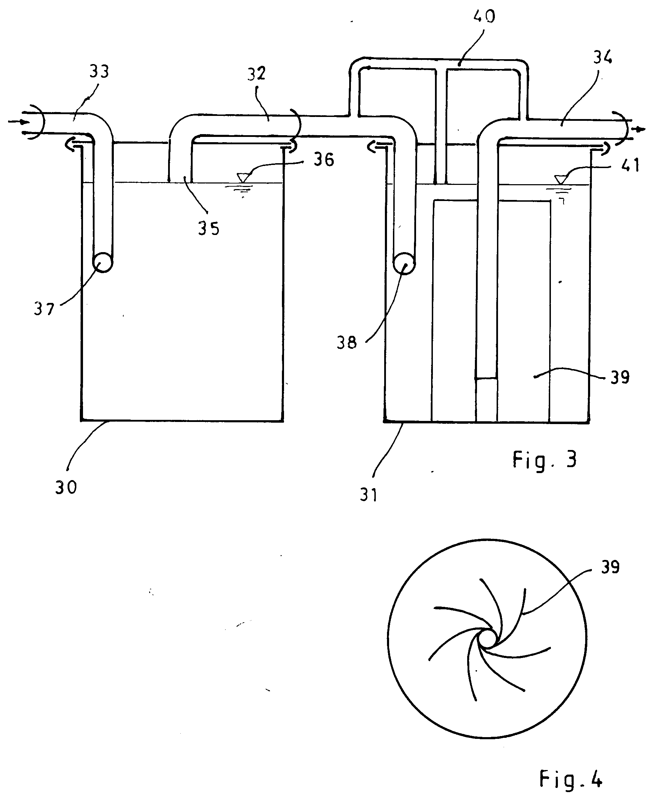

Die Ausführungsform nach den Figuren 3 und 4 enthält zwei Beruhigungsbehälter 30, 31, die nacheinander durchflossen werden. Der erste Behälter 30 dient der Sinkstoff-, der zweite 31 der Schwimmstoffabscheidung. Die Verbindungsleitung 32 verläuft in gleicher Höhe wie Zulauf- (33) und Klarwasser-Ablaufleitung 34. Die im ersten Behälter 30 beginnende Verbindungsleitung 32 bestimmt mit ihrer Mündung 35 den Flüssigkeitsspiegel 36 und bewirkt, daß das mit Schwimmstoffen belastete Abwasser in den zweiten Behälter überführt wird. Der Zulauf 37, 38 verläuft in den beiden Behältern 30, 31 tangential, so daß sich eine spiralförmige Durchströmung einstellt. Im Schwimmstoffbehälter wird diese Strömung innen durch sternförmig angeordnete Prallbleche 39 gebremst. Verbindungs- (32) und Ablaufleitung 34 besitzen eine gemeinsame Entlüftung 40, die auch an das Luftpolster im zweiten Behälter 31 angeschlossen ist.

Dadurch wird auch dort ein Freispiegel 41 aufrechterhalten; es ist ein Raum für das aus den Rohren auslaufende Abwasser vorhanden, wenn die Deckel zur Entsorgung der Behälter abgenommen werden. Wenn es nötig ist, die Verrohrung mit den Deckeln ebenfalls zu lösen, dann ist es zweckmäßig, die Rohrleitungen mit Schnellverbindungen auszustatten.

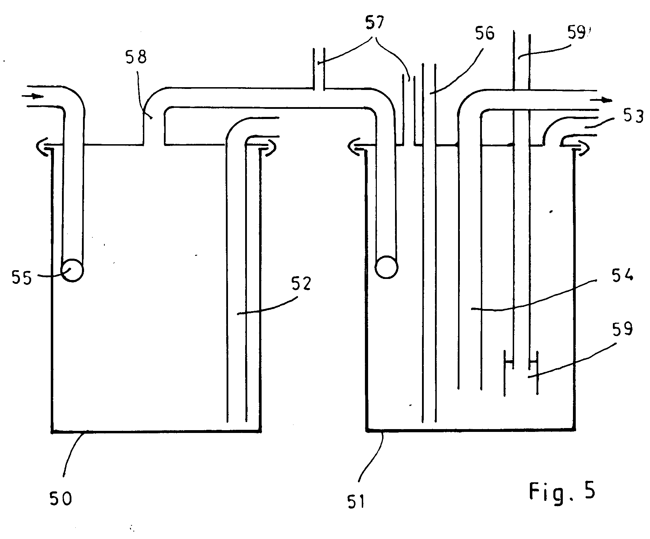

Bei dem letzten Ausführungsbeispiel nach Fig. 5 sind wieder zwei Behälter 50, 51 vorgesehen, die jedoch mit Abzugsleitungen 52, 53 für die abgetrennten Abwasser-Inhaltsstoffe in solcher Höhe ausgestattet sind, daß bei Verschließen der Klarwasser-Ablaufleitung 54 die Sinkstoffe und die Schwimmstoffschicht durch weitere Zufuhr von Abwasser oder Trinkwasser in den Zulauf 55 entsorgt werden können. Damit der zweite Behälter 51 mit den darin gespeicherten Schwimm- und Sinkstoffschichten entsorgt werden kann, ist eine zusätzliche Abzugsleitung 59 für die wässrige Phase vorgesehen; sie beginnt etwa in Höhe der Oberseite der zu erwartenden Sinkstoffschicht. Dadurch wird das Abziehen der absinkenden Schwimmstoffschicht verhindert. Der zweite Behälter 51 besitzt außerdem noch eine Tauchleitung 56 für seine vollständige Entleerung, die bis zum Boden reicht.

Da der Abzug der Schwimmstoffe durch einen Freispiegel und eine Tauchleitung nicht begrenzt ist, ist es sinnvoll, wenigstens den ersten Abschnitt der Abzugsleitung durchsichtig auszuführen oder in der Nähe des Abzugs ein Schauglas in den Deckel einzubauen. Die Be- und Entlüftung 57 des Systems mündet hier in die Verbindungsleitung 58 und den Deckel des zweiten Behälters.

## Patentansprüche

1. Abscheideanlage für mit Sink- und/oder Schwimmstoffen, insbesondere Fetten, beladene Abwässer, enthaltend mindestens einem mit Zu- und Ablaufleitungen versehenen, vorzugsweise stehend hohlzylindrischen Beruhigungsbehälter, wobei die Zulaufleitung an der Behälterwand tangential einmündet und die Klarwasserablaufleitung vom Behälterzentrum weggeführt ist und wobei mindestens eine Abzugsleitung für die Trennfraktion vorgesehen ist, **dadurch gekennzeichnet** daß alle Leitungen (5, 7, 33, 34, 54, 55) durch den Deckel (3) des Beruhigungsbehälters (1, 30, 31, 50, 51) geführt sind, daß der Beruhigungsbehälter (30, 31, 50, 51) als standardisiertes genormtes Faß aus Stahlblech und/oder Kunststoff und die Befestigung des Deckels (3) als dort üblicher Keilspannring (2) ausgebildet ist und daß eventuell vorgesehene Einbauteile (20, 21, 22, 39) zur Strömungsführung und -beruhigung an dem Deckel und/oder den Leitungen (7, 34) befestigt sind.

2. Abscheideanlage nach Anspruch 1, **dadurch gekennzeichnet**, daß alle Leitungen (32, 33, 34) mit schnell lösbaren Rohrverbindern an die stationär verlegten Weiterleitungen angeschlossen sind.

3. Abscheideanlage nach Anspruch 1 oder 2, **dadurch gekennzeichnet**, daß das Strömungsführungselement als spiralförmig verlaufende Leitwand (20) ausgebildet ist, die außen an der tangentialen Mündung der Zulaufleitung (6) beginnt und sich bis an die im Zentrum des Beruhigungsbehälters liegende Klarwasserablaufleitung (7) erstreckt.

4. Abscheideanlage nach Anspruch 3, **dadurch gekennzeichnet**, daß die Klarwasserablaufleitung (7) zu der Leitwand (20) hin halbseitig offen ist.

5. Abscheideanlage nach Anspruch 1 bis 4, **dadurch gekennzeichnet**, daß die vom Boden im Zentrum des Beruhigungsbehälters (31) hochgeführte Klarwasserablaufleitung (34) von bis knapp unter den Flüssigkeitsspiegel (41) hochreichenden Leitwänden (39) umgeben ist, die sternförmit angeordnet und gewölbt ausgebildet sind.

6. Abscheideanlage nach Anspruch 1 bis 5, **dadurch gekennzeichnet**, daß alle Leitungen (5, 7, 9, 10) Absperrorgane (4, 8, 11) aufweisen.

7. Abscheideanlage nach Anspruch 6, **dadurch gekennzeichnet**, daß eine durch den Deckel (3) geführte Druckluftleitung (13) zum Herausdrücken der abgetrennten Stoffe vorgesehen ist.

8. Abscheideanlage nach Anspruch 7, **dadurch gekennzeichnet**, daß die Abzugsleitung (9) für die Schwimmstoffe unterhalb des Deckels (3) in einer Höhe beginnt, bis zu der die Schwimmstoffe abgezogen werden sollen.

9. Abscheideanlage nach Anspruch 8, **dadurch gekennzeichnet**, daß dem Beginn der Abzugsleitung (9) ein nach oben divergierender Konusring (21) zum Zusammenziehen der Schwimmstoffe vorgeordnet ist.

10. Abscheideanlage nach Anspruch 1 bis 9, **dadurch gekennzeichnet**, daß die Abzugsleitung (10) für die Sinkstoffe in Bodennähe beginnt und daß dem Beginn ein nach unten divergierender Konusring (22) zum Zusammenziehen der Sinkstoffe vorgeordnet ist.

11. Abscheideanlage nach einem oder mehreren der Ansprüche 1 bis 10, **dadurch gekennzeichnet**, daß eine weitere Abzugsleitung (59) für den Abzug der wässrigen Phase vorgesehen ist, die durch den Deckel (3) verlegt ist und unmittelbar über der zu erwartenden Sinkstoffschicht beginnt.

12. Abscheideanlage nach einem oder mehreren der Ansprüche 1 bis 11 mit zwei hintereinandergeschalteten Beruhigungsbehältern für Sink- und Schwimmstoffe, die durch eine Verbindungsleitung miteinander verbunden sind, **dadurch gekennzeichnet**, daß die Verbindungsleitung (58) und die Klarwasserablaufleitung (54) mit ihrer Scheitel- bzw. Überlaufstelle höher gelegt sind als die Abzugsstelle der mit Absperreinrichtungen versehenen Abzugsleitungen (52, 53) für Sinkstoffe und Schwimmstoffe.

13. Abscheidenlage nach Anspruch 12, **dadurch gekennzeichnet**, daß die Verbindungsleitung und die Klarwasserablaufleitung (32, 34) eine gemeinsame Be- und Entlüftungsleitung (40) aufweisen, die absperrbar ist.

14. Abscheideanlage nach Anspruch 1 bis 13, **dadurch gekennzeichnet**, daß die Abzugsleitungen für die Sink- und Schwimmstoffe und die wässrige Phase mit Schnellkuppungen für den Anschluß von Sammelgefäßen versehen sind.

## Claims

1. Separator for waste water containing suspended and/or settleable solids, particularly grease, including at least one stilling tank, preferably an upright hollow cylinder, with inlet and discharge pipes, the inlet pipe ending tangentially at the tank wall and the discharge pipe being directed outside the tank center, and provided at least with one drain pipe for the parting liquid, **characterized in that** all pipes (5, 7, 33, 34, 54, 55) are passing through the cover (3) of the stilling tank (1, 30, 31, 50, 51), that the stilling tank (30, 31, 50, 51) is a standard wide-mouth barrel made of steel blade and/or plastic and the attachment for the cover (3) is a standard tapered locking ring (2) and that possibly installed inserts (20, 21,22, 39) for directing and steadying the water flow are attached to the cover and/or pipes (7, 34).

2. Separator according to claim 1, **characterized in that** all pipes (32, 33, 34) are connected to the stationary continuing pipes by quick-release pipe joints.

3. Separator according to the claims 1 or 2, **characterized in that** the flow directing element is a spiral baffle blade (20) beginning at the outside of the tangentially ending inlet pipe (6) and ending at the clear water discharge pipe (7) in the center of the stilling tank.

4. Separator according to claim 3, **characterized in that** the clear water discharge pipe (7) is semilaterally open towards the baffle blade (20).

5. Separator according to the claims 1 to 4, **characterized in that** the vertical clear water discharge pipe (34) in the tank center (31) is surrounded by baffle blades (39) reaching from the tank bottom just below the water surface (41) which are arranged radially and have a curved surface.

6. Separator according to the claims 1 to 5, **characterized in that** all pipes (5, 7, 9, 10) are provided with a shut-off device (4, 8, 11).

7. Separator according to claim 6, **characterized in that** a pipe for pressurized air (13) for expulsion of separated solids is passing through the cover (3).

8. Separator according to claim 7, **characterized in that** the entrance of the drain pipe (9) for suspended solids is arranged below the cover (3) at a height up to which the the suspended solids shall be drained.

9. Separator according to claim 8, **characterized in that** a taper sleeve (21) diverging upward intended to concentrate the suspended solids is attached to the entrance of the drain pipe (9) for suspended solids.

10. Separator according to the claims 1 through 9, **characterized in that** a taper sleeve (22) diverging downward intended to concentrate the settleable solids is attached to the drain pipe (10) for the settleable solids beginning close to the tank bottom.

11. Separator according to one or several of the claims 1 through 10, **characterized in that** an additional drain pipe (59) for discharge of the liquid phase passes through the cover (3) where it is attached and which begins right above the expected layer of settled solids.

12. Separator according to one or several of the claims 1 through 11 including two stilling tanks in a row for suspended and settleable solids respectively which are connected by a joint pipe, **characterized in that** the vertex or overflow of the joint pipe (58) and the clear water discharge pipe (54) is located higher than the entrance of the drain pipes (52, 53) for the suspended and settleable solids respectively, provided each with a shut-off device.

13. Separator according to claim 12, **characterized in that** the joint pipe and the clear water discharge pipe (32, 34) have a common ventilation pipe (40) which is provided with a shut-off device.

14. Separator according to claim 1 through 13, **characterized in that** the drain pipes for the suspended and settleable solids and the liquid phase are provided with quick-fitting pipe unions for connecting a receptacle.

## Revendications

1. Séparateur pour les matières suspendues et/ou sédimentées, particulièrement des graisses, dans les eaux usées comprenant au moins un récipient tranquillisant, préférablement un cylindre creux vertical, pourvu d'un tuyau d'amenée débouchant tangentiellement à la paroi du récipient et d'un tuyau de sortie de l'eau clarifiée sortant du centre du récipient et au moins d'un tuyau d'écoulement pour le liquide de séparation, **caractérisé en ce que** tous les tuyaux (5, 7, 33, 34, 54, 55) sont installés de manière qu'ils traversent le couvercle (3) du récipient tranquillisant (1, 30, 31, 50, 51), que le récipient tranquillisant (30, 31, 50, 51) est une tonne standard à col large en tôle d'acier et/ou matière plastique et que la fixation du couvercle (3) est une bague conique de serrage standard (2) et que les chicanes éventuellement installées (20, 21, 22, 39) destinées à conduire et tranquilliser le courant d'eau, sont fixées au couvercle et/ou aux tuyaux (7, 34).

2. Séparateur selon revendication 1, **caractérisé en ce que** tous les tuyaux (32, 33, 34) sont munis des jonctions rapides pour la connexion aux tuyaux stationnaires.

3. Séparateur selon une des revendications 1 ou 2, **caractérisé en ce que** l'élément de conduite du courant d'eau est une chicane (20) laquelle commence en dehors du point où débouche tangentiellement le tuyau d'amenée et s'étend, allant en spirale, jusqu'au tuyau de sortie de l'eau clarifiée (7) situé au centre du récipient tranquillisant.

4. Séparateur selon revendication 3, **caractérisé en ce que** le tuyau de sortie de l'eau clarifiée (7) est semi-ouvert vis-à-vis de la chicane (20).

5. Séparateur selon les revendications 1 à 4, **caractérisé en ce que** le tuyau de sortie de l'eau clarifiée vertical (34) situé au centre du récipient tranquillisant (31) est entouré par des chicanes (39) qui s'étendent juste au-dessous de la surface d'eau et qui sont arrangées en étoile et tiennent une surface bombée.

6. Séparateur selon les revendications 1 à 5, **caractérisé en ce que** tous les tuyaux (5, 7, 9, 10) sont munis d'un organe d'arrêt (4, 8, 11).

7. Séparateur selon revendication 6, **caractérisé en ce qu'**une conduite d'air comprimé (13) destinée à expulser les matières séparées, traverse le couvercle (3).

8. Séparateur selon revendication 7, **caractérisé en ce que** le tuyau de décharge (9) des flottants au-dessous du couvercle (3) commence à l'hauteur jusqu'à quelle les flottants doivent être évacués.

9. Séparateur selon revendication 8, **caractérisé en ce que** l'entrée du tuyau de décharge (9) des flottants est pourvue d'une bague conique divergeant vers le haut (21) pour concentrer les flottants.

10. Séparateur selon les revendications 1 à 9, **caractérisé en ce que** le tuyau de décharge (10) des matières sédimentées commence auprès du fond du récipient et que l'entrée du tuyau est pourvue d'une bague conique divergeant vers le bas (22) pour concentrer les matières sédimentées.

11. Séparateur selon une des revendications 1 à 10, **caractérisé en ce qu'**un tuyau de décharge additionnel (59) est prévu pour l'élimination de la phase liquide, lequel passe à travers le couvercle (3) et commence directement au-dessus der la couche de matières sédimentées expectée.

12. Séparateur selon une des revendications 1 à 11 comprenant deux récipients tranquillisants en série pour les flottants et les matières sédimentées étant reliés par un tuyau de communication, **caractérisé en ce que** le point culminant ou bien bord-déversoir du tuyau de communication (58) et du tuyau de sortie de l'eau clarifiée (54) est situé au-dessus de l'entrée des tuyaux de décharge (52, 53) des flottants et des matières sédimentées respectivement, lesquels sont munis chacun d'un organe d'arrêt.

13. Séparateur selon revendication 12, **caractérisé en ce que** le tuyau de communication et le tuyau de sortie de l'eau clarifiée (32, 34) sont munis d'une conduite d'aération (40) commune, laquelle tient un organe d'arrêt.

14. Séparateur selon une des revendications 1 à 13, **caractérisé en ce que** les tuyaux de décharge des flottants et des matières sédimentées et pour la phase liquide respectivement, sont munis des raccords pompiers pour le branchements des récipients collecteurs.
